# EUROPÄISCHE PATENTSCHRIFT

(11) **EP 4 359 751 B1**
(45) Veröffentlichungstag und Bekanntmachung des Hinweises auf die Patenterteilung: **16.10.2024**
(21) Anmeldenummer: 23758598.9
(22) Anmeldetag: 17.08.2023
(51) Int. Cl.: G01L 5/00, F16C 17/00, G01H 1/00, G01M 13/045

(54) **VERFAHREN UND VORRICHTUNG ZUR ÜBERWACHUNG DES BETRIEBS EINER GLEITLAGERSTELLE/-ANORDNUNG UND EINE ENTSPRECHENDE GLEITLAGERSTELLE/-ANORDNUNG**
METHOD AND DEVICE FOR MONITORING THE OPERATION OF A SLIDING BEARING POINT/ARRANGEMENT AND A CORRESPONDING SLIDING BEARING POINT/ARRANGEMENT
PROCÉDÉ ET DISPOSITIF DE SURVEILLANCE DU FONCTIONNEMENT D'UN POINT/AGENCEMENT DE PALIER COULISSANT ET POINT/AGENCEMENT DE PALIER COULISSANT CORRESPONDANT

(30) Priorität: 23.08.2022 DE 102022121294
(43) Veröffentlichungstag der Anmeldung: 01.05.2024
(73) Patentinhaber: KS Gleitlager GmbH, 68789 St. Leon-Rot (DE)
(72) Erfinder: WITT, Mario, 69115 Heidelberg (DE); WINTER, Manuel, 68723 Oftersheim (DE)
(74) Vertreter: DREISS Patentanwälte PartG mbB
(86) Internationale Anmeldenummer: PCT/EP2023/072718
(87) Internationale Veröffentlichungsnummer: WO 2024/041975

(56) Entgegenhaltungen:
- WO-A1-2013/156068
- US-A1- 2016 223 496
- US-A1- 2016 356 657
- US-A1- 2021 310 521

## Beschreibung

Die Erfindung betrifft ein Verfahren und eine Vorrichtung zur Überwachung eines Betriebs einer Gleitlagerstelle/-anordnung mittels eines Sensors, wobei durch den Sensor ein Signal erzeugt wird, welches Signal eine mit der Gleitlagerstelle/- anordnung assoziierte Schwingungsanregung charakterisiert. Ferner betrifft die Erfindung eine Gleitlagerstelle/- anordnung, welche mechanisch gekoppelt ist mit der erfindungsgemäßen Vorrichtung.

Gleitlager werden in unterschiedlichen Bereichen der Industrie eingesetzt. Dabei kommen Gleitlager auch in großen Maschinen, wie beispielsweise Windkraftanlagen, zum Einsatz. Eine Überwachung von Gleitlagern dient dem Erfassen von fehlerhaften Betriebszuständen, welche zur Schädigung oder zum Stillstand der gesamten Maschine führen können. Ferner können durch die Überwachung von Gleitlagern Wartungsintervalle optimiert werden.

Wenn im Rahmen dieser Anmeldung von einer Gleitlagerstelle oder Gleitlageranordnung die Rede ist, dann wird hierunter verstanden, dass eine Komponente, beispielsweise eine Welle oder ein Zapfen, bezüglich einer anderen Komponente, beispielsweise eine Gehäusekomponente, möglichst reibungsarm drehbar oder verschieblich gleitgelagert ist oder auch nur gleitbeweglich abgestützt ist. Zwischen den Komponenten oder an wenigstens einer der Komponenten ist üblicherweise eine Gleitschicht, eine Gleitbeschichtung oder ein Schmierfilm ausgebildet. Zwischen den Komponenten oder zur Lagerung einer der Komponenten kann ein buchsenförmiges Gleitlagerelement mit Gleitschicht vorgesehen sein. Beispielsweise kann eine Gleitlagerstelle/-anordnung ein Gehäuse, ein darin typischerweise festsitzend eingesetztes Gleitlagerelement und ein darin gelagertes Wellenteil umfassen. Eine Gleitlagerstelle/-anordnung kann aber auch ein Maschinenteil, insbesondere ein Zahnrad, als erste Komponente umfassen, welches auf einer Welle als zweiter Komponente drehbar gleitgelagert ist. Die Welle kann hierfür ein buchsenförmiges Gleitelement oder eine Gleitbeschichtung umfassen.

Aus der WO 2013/156068 A1 ist eine Vorrichtung und ein Verfahren bekannt, welche durch Erfassen von Messwerten Schallemissionen in einem Gleitlager charakterisieren und durch Berechnung eines Kennwerts aus diesen Messwerten einen Betriebszustand des Gleitlagers klassifizieren. Ein Sensorelement, das mit dem Gleitlager mechanisch gekoppelt ist, wird zur Erfassung von Messwerten verwendet. Dabei werden mit dem Sensorelement im Gleitlager auftretende Schallemissionen in einem breiten Frequenzbereich von 50 bis 150 kHz erfasst. Es ist ausgeführt, dass das Sensorelement als Beschleunigungssensor oder als Drucksensor oder als Dehnmessstreifen oder als piezoelektrisches Sensorelement ausgebildet sein kann. Bevorzugt sei das Sensorelement als ein mikromechanischer Sensor, also als ein kapazitiver Sensor ausgebildet, der beispielsweise eine seismische Masse umfassen könne. Diese haben aber eine geringe Bandbreite, eine geringe Messauflösung und einen schlechten Dynamikbereich (Quotient der größten gemessenen zur kleinsten vom Rauschen unterscheidbaren Signalstärke ist gering). Für die Klassifizierung des Betriebszustands sind bei der vorbekannten Vorrichtung in einer Recheneinrichtung vorbestimmte Betriebszustände und dazugehörige Kennwerte hinterlegt. Es ist also erforderlich, dass zuvor eine genaue Datenerfassung von insbesondere gezielt herbeigeführten Betriebszuständen durchgeführt wird, um die notwendige Datengrundlage zur Klassifizierung zu schaffen.

Ferner ist aus der US2016/0356657A1 ein System und ein Verfahren bekannt, um das Versagen eines Gleitlagers durch Erfassen und Auswerten von Dehnungsbelastungen am Gleitlagergehäuse zu bestimmen. Für die Messung wird wenigstens ein Dehnungsaufnehmer am Gleitlagergehäuse angeordnet. Der Dehnungsaufnehmer erzeugt ein elektrisch messbares Ausgangssignal in Reaktion auf Änderungen eines Dehnungszustands des Lagergehäuses. Die Amplituden der interessierenden Dehnungsfrequenzen können als Trend ermittelt und mit dem Verschleiß des Gleitlagers korreliert werden. Als mögliche Dehnungsaufnehmer sind ein Dehnungsmessstreifen mit einer Metallfolie, ein piezoelektrischer Dehnungsmessstreifen und ein piezoresistiver Dehnungsmessstreifen aufgeführt. Als nachteilig gegenüber den verwendeten Dehnungsaufnehmern wird die Verwendung eines Näherungssensors und eines Beschleunigungssensors beschrieben. Vor allem der Beschleunigungssensor sei dahingehend nachteilig, dass dieser ein Signal erzeuge, welches eine Vielzahl von störenden Frequenzgeräuschen enthalte. Eine Unterscheidung dahingehend, ob die Frequenzgeräusche von einem intakten oder bereits geschädigten Gleitlager stammen, sei mit diesem Messmittel schwierig.

Der vorliegenden Erfindung liegt die Aufgabe zugrunde, ein vereinfachtes Verfahren zur Überwachung des Betriebs einer Gleitlagerstelle/ -anordnung mit einer verringerten Datenmengenerfassung und dennoch sicherer Datenauswertung bereit zu stellen.

Die Aufgabe wird erfindungsgemäß gelöst durch ein Verfahren zur Überwachung des Betriebs einer Gleitlagerstelle/-anordnung mit den Merkmalen des Anspruchs 1. Vorteilhafte Ausführungsformen finden sich in den Unteransprüchen.

Es wird also erfindungsgemäß vorgeschlagen, dass der Sensor ein piezoelektrischer Beschleunigungssensor ist und dass der piezoelektrische Beschleunigungssensor eine schwingfähige seismische Masse aufweist und demgemäß eine Resonanzfrequenz aufweist und dass die Resonanzfrequenz in einer Einbausituation des Sensors in einem Bereich von 20 bis 70 kHz liegt,
und dass das Signal des Beschleunigungssensors nur in einem die Resonanzfrequenz beinhaltenden Teilfrequenzbereich ausgewertet wird, der durch einen oberen Frequenzwert und einen unteren Frequenzwert begrenzt wird,
und dass das Signal des Beschleunigungssensors über die Zeit und mit einer Abtastrate erfasst wird, die wenigstens dem zweifachen des oberen Frequenzwerts entspricht,
und dass aus dem Signal des Beschleunigungssensors in diesem Teilfrequenzbereich ein gemittelter Kennwert gebildet wird, und dass anhand des Kennwerts auf einen Reibzustand der Gleitlagerstelle/-anordnung geschlossen wird, und dass ausgehend von einem hydrodynamischen Reibzustand auf einen durch Mischreibung geprägten Reibzustand geschlossen wird, wenn der Kennwert im zeitlichen Verlauf ansteigt.

Im Betrieb entstehen in der Gleitlagerstelle/-anordnung Schwingungen, die sich in Form von Körperschall in der Gleitlagerstelle/-anordnung und auch in angrenzende Komponenten ausbreitet.

Die schwingfähige seismische Masse des piezoelektrischen Beschleunigungssensors wird durch den im Betrieb der Gleitlagerstelle/-anordnung entstehenden Körperschall zum Schwingen angeregt. Über den piezoelektrischen Effekt wird aus der Schwingung der seismischen Masse das Signal des Sensors erzeugt, welches die mit der Gleitlagerstelle/-anordnung assoziierte Schwingungsanregung charakterisiert. Dabei ist insbesondere die Amplitude des Körperschalls abhängig von dem Reibungszustand der Gleitlagerstelle/-anordnung, alsohydrodynamische Reibung, Mischreibung oder insbesondere Festkörperreibung. Der Beschleunigungssensor kann ein ein-, zwei- oder dreiachsiger piezoelektrischer Beschleunigungssensor mit seismischer Masse sein.

Der Beschleunigungssensor ist mittels der schwingfähigen seismischen Masse derart ausgebildet, dass seine Resonanzfrequenz in der Einbausituation in einem Bereich von 20 bis 70kHz liegt. Die Resonanzfrequenz des Beschleunigungssensors ist sensorspezifisch, aber auch abhängig von der Einbausituation bzw. der Befestigung des Beschleunigungssensors an der Gleitlagerstelle/-anordnung, beispielsweise mittels Verschrauben, Verkleben, magnetischer Anordnung etc.. Ist die Resonanzfrequenz des Beschleunigungssensors in seiner Einbausituation nicht bekannt, dann sollte sie vorneweg bestimmt werden.

In einem weiteren Verfahrensschritt wird das Signal des Beschleunigungssensors in dem die Resonanzfrequenz beinhaltenden Teilfrequenzbereich ausgewertet.

Tritt Mischreibung in der Gleitlagerstelle/-anordnung auf, dann wird der Beschleunigungssensor im Resonanzbereich verstärkt angeregt, wodurch das Signal des Beschleunigungssensors in dem Teilfrequenzbereich verstärkt wird. D.h. der Beschleunigungssensor wird im Bereich mit der höchsten Empfindlichkeit ausgewertet, was zu einer hohen Zuverlässigkeit des Verfahrens führt. Somit ist es mit dem erfindungsgemäßen Verfahren auch möglich, bei niedrigen Drehzahlen (niedrigen Gleitgeschwindigkeiten z.B. Start Stopp Betrieb) den durch Mischreibung in Gleitlagern erzeugten Körperschall zu erfassen.

Dadurch, dass die Abtastrate wenigstens dem zweifachen des oberen Frequenzwerts des auszuwertenden Teilfrequenzbereichs entspricht, kann eine Auswertung des Signals des Beschleunigungssensors bis zu dem oberen Frequenzwert durchgeführt werden. Ist beispielsweise die Abtastrate genau auf das Zweifache des auszuwertenden Teilfrequenzbereichs beschränkt, dann wird das auswertbare Signal auf den oberen Frequenzwert begrenzt.

Der zu überwachende Teilfrequenzbereich ist vorzugsweise unabhängig von einem Lagermaterial, einer Drehzahl (Gleitgeschwindigkeit), einer Belastung und einem Schmierstoff sowie einer Schmierstofftemperatur.

Bei der Auswertung wird aus dem Signal des Beschleunigungssensors in diesem Teilfrequenzbereich ein Kennwert gebildet. Steigt der Kennwert im zeitlichen Verlauf an, so kann auf eine Mischreibung geschlossen werden. Ein Vergleich mit einer hinterlegten Referenzwerttabelle ist nicht zwingend erforderlich, was als vorteilhaft erachtet wird. Es ist in einfacher Weise eine Echt-Zeit Überwachung im Betrieb der Gleitlagerstelle/-anordnung realisierbar. Eine Mischreibung der Gleitlagerstelle/-anordnung ist zuverlässig erkennbar, und einer Schädigung der Gleitlagerstelle/- anordnung kann vorgebeugt werden, bspw. in dem eine Wartung der Gleitlagerstelle/-anordnung frühzeitig durchgeführt wird.

Es erweist sich als vorteilhaft, wenn die Resonanzfrequenz in der Einbausituation des Sensors in einem Bereich von 20 bis 50 kHz, insbesondere von 20 bis 40 kHz liegt. Dadurch, dass der Bereich in dem die Resonanzfrequenz liegt kleiner ist, kann auch der auszuwertende Teilfrequenzbereich verkleinert werden, wodurch eine geringere Datenmenge anfällt und auszuwerten ist.

In einer vorteilhaften Ausführungsform beträgt der obere Frequenzwert höchstens das 1,2-Fache oder höchstens das 1,3-Fache oder höchstens das 1,4-Fache oder höchstens das 1,5-Fache oder höchstens das 1,6-Fache oder höchstens das 1,7-Fache der Resonanzfrequenz.

Nach einer Ausführungsform der Erfindung hat es sich als vorteilhaft erwiesen, wenn der untere Frequenzwert mindestens das 0,8-Fache oder mindestens das 0,7-Fache oder mindestens das 0,6-Fache oder mindestens das 0,5-Fache oder mindestens das 0,4- oder mindestens das 0,3-Fache der Resonanzfrequenz beträgt.

Es ist vorteilhaft, wenn der Kennwert ein statistischer Mittelwert ist, insbesondere der quadratische Mittelwert (RMS), der Maximalwert, der Spitze-Tal-Wert, die Varianz (Verteilung der Werte um den Mittelwert), der Kurtosiswert (Maß für die Steilheit), ein Scheitelwert (Verhältnis des Maximalwerts zum quadratischen Mittelwert). Der Kennwert ist einfacher zu handhaben als das erfasste Signal des Beschleunigungssensors. Durch die Bildung des Kennwerts werden störende Signalteile und/oder Ausreiser im Signal des Beschleunigungssensors kompensiert. Trends und Entwicklungen des Kennwerts lassen sich über die Zeit erfassen.

Bei einer Ausführungsform hat es sich als vorteilhaft erwiesen, wenn ausgehend von einem hydrodynamischen Reibzustand auf einen durch Mischreibung geprägten Reibzustand geschlossen wird, wenn der Kennwert im zeitlichen Verlauf einen vorgegebenen oder vorgebbaren Schwellwert übersteigt. Es ist auch denkbar, dass zusätzlich ein Schwellwert für Festkörperreibung vorgegeben werden kann für den Fall, dass die Mischreibung überschritten wird. Durch einen Schwellwert kann sichergestellt werden, dass Mischreibung zuverlässig erkannt wird. Ferner wird als vorteilhaft angesehen, dass schon bei Inbetriebnahme der Gleitlagerstelle/-anordnung mit Hilfe des Schwellwerts Mischreibung erkannt werden kann, falls der gebildete Kennwert den Schwellwert überschreitet.

Es ist weiter vorteilhaft, wenn das Signal des Beschleunigungssensors mittels eines Hochpassfilters und insbesondere zusätzlich mittels eines Tiefpassfilters gefiltert wird. Das Signal kann mittels des Hochpassfilters und insbesondere zusätzlich mittels des Tiefpassfilters vor der Bildung des Kennwerts von für die Überwachung unnötigen Teilfrequenzbereichen bereinigt werden.

Bei einer Ausführungsform hat es sich als vorteilhaft erwiesen, wenn eine Grenzfrequenz des Hochpassfilters dem unteren Frequenzwert des Teilfrequenzbereichs entspricht und/oder dass eine Grenzfrequenz des Tiefpassfilters dem oberen Frequenzwert des Teilfrequenzbereichs entspricht. Das Signal kann auf den auszuwertenden Teilfrequenzbereich begrenzt werden, sodass eine geringere Datenmenge erzeugt wird, als wenn das ungefilterte Signal ausgewertet wird. Es entstehen geringere Kosten und eine Zeitersparnis für die Messdatenerfassung und Messdatenauswertung.

Nach einer anderen Ausführungsform der Erfindung hat es sich als vorteilhaft erwiesen, wenn ein Signal des Beschleunigungssensors fouriertransformiert wird und daran anschließend nur in dem Teilfrequenzbereich ausgewertet wird. Diese Fouriertransformation stellt insbesondere eine Alternative zu einer Filterung dar.

Gegenstand der Erfindung ist auch eine Vorrichtung zur Überwachung des Betriebs einer Gleitlagerstelle/-anordnung, umfassend einen Sensor, der mechanisch mit der Gleitlagerstelle/-anordnung gekoppelt anordenbar oder angeordnet ist, wobei durch den Sensor ein Signal erzeugt wird, welches Signal eine mit der Gleitlagerstelle/-anordnung assoziierte Schwingungsanregung charakterisiert,
und weiter umfassend eine elektronische Auswerteeinrichtung mit einem Prozessor und einem Speicher mit einem darauf abgelegten Computerprogrammcode, wobei der Sensor ein piezoelektrischer Beschleunigungssensor ist und dass der piezoelektrische Beschleunigungssensor eine schwingfähige seismische Masse aufweist und demgemäß eine Resonanzfrequenz aufweist, wobei die seismische Masse durch Körperschall der Gleitlagerstelle/-anordnung zum Schwingen angeregt wird und hierdurch das Signal erzeugt wird, wobei die Resonanzfrequenz in einer Einbausituation des Sensors in einem Bereich von 20 bis 70 kHz liegt,
und dass der Speicher und der Computerprogrammcode im Zusammenwirken mit dem Prozessor konfiguriert sind, um das Signal des Beschleunigungssensors nur in einem die Resonanzfrequenz beinhaltenden Teilfrequenzbereich auszuwerten, der durch einen oberen Frequenzwert und einen unteren Frequenzwert begrenzt wird,
und weiter konfiguriert sind, um das Signal des Beschleunigungssensors über die Zeit und mit einer Abtastrate zu erfassen, die wenigstens dem zweifachen des oberen Frequenzwerts entspricht,
und weiter konfiguriert sind, um aus dem Signal des Beschleunigungssensors in diesem Teilfrequenzbereich einen gemittelten Kennwert zu bilden,
und anhand des Kennwerts auf einen Reibzustand der Gleitlagerstelle/-anordnung zu schließen,
und weiter konfiguriert sind, um ausgehend von einem hydrodynamischen Reibzustand auf einen durch Mischreibung geprägten Reibzustand zu schließen, wenn der Kennwert im zeitlichen Verlauf ansteigt. - Die Vorrichtung ist also zur Ausführung des erfindungsgemäßen Verfahrens ausgebildet.

Bei einer weiteren Ausführungsform hat es sich als vorteilhaft erwiesen, wenn die Vorrichtung einen Hochpassfilter und insbesondere zusätzlich einen Tiefpassfilter umfasst, und dass das Signal des Beschleunigungssensors mittels des Hochpassfilters und insbesondere zusätzlich mittels des Tiefpassfilters gefiltert wird. Ein Hochpassfilter und insbesondere der Tiefpassfilter können beispielsweise als elektrotechnische Bauelemente ausgebildet sein. Es ist auch denkbar, dass der Speicher und der Computerprogrammcode im Zusammenwirken mit dem Prozessor als Hochpass- und insbesondere als Tiefpassfilter konfiguriert sein können.

Es hat sich als vorteilhaft erwiesen, wenn eine Grenzfrequenz des Hochpassfilters dem unteren Frequenzwert des Teilfrequenzbereichs entspricht und/oder dass eine Grenzfrequenz des Tiefpassfilters dem oberen Frequenzwert des Teilfrequenzbereichs entspricht.

Nach einer weiteren Ausführungsform hat es sich als vorteilhaft erwiesen, dass die elektronische Auswerteeinrichtung ausgebildet ist, das Signal des Beschleunigungssensors fourier zu transformieren und daran anschließend nur in dem Teilfrequenzbereich auszuwerten.

Ein weiterer Gegenstand der Erfindung ist eine Gleitlagerstelle/-anordnung, welche mechanisch gekoppelt ist mit einer erfindungsgemäßen Vorrichtung zur Überwachung des Betriebs der Gleitlagerstelle/-anordnung, so dass von der Gleitlagerstelle/-anordnung erzeugter Körperschall auf die Vorrichtung und deren piezoelektrischen Beschleunigungssensor übertragen und durch die Vorrichtung überwacht werden kann.

Weitere Merkmale und Vorteile der Erfindung sind Gegenstand der nachfolgenden Beschreibung und der zeichnerischen Darstellung von Ausführungsbeispielen. Es zeigen:
- Fig. 1: eine schematische und teilgeschnittene Ansicht einer Gleitlagerstelle/-anordnung und einer Vorrichtung zur Überwachung des Betriebs der Gleitlagerstelle/anordnung;
- Fig. 2: eine schematische Darstellung von Schritten eines erfindungsgemäßen Verfahrens zum Überwachen einer Gleitlagerstelle/-anordnung nach einer ersten Ausführungsform;
- Fig. 3: eine schematische Darstellung von Schritten des erfindungsgemäßen Verfahrens nach einer zweiten Ausführungsform;
- Fig. 4: eine schematische Darstellung von Schritten des erfindungsgemäßen Verfahrens nach einer dritten Ausführungsform;
- Fig. 5: eine grafische Darstellung zweier fouriertransformierter Signale unterschiedlicher Reibzustände eines Beschleunigungssensors.

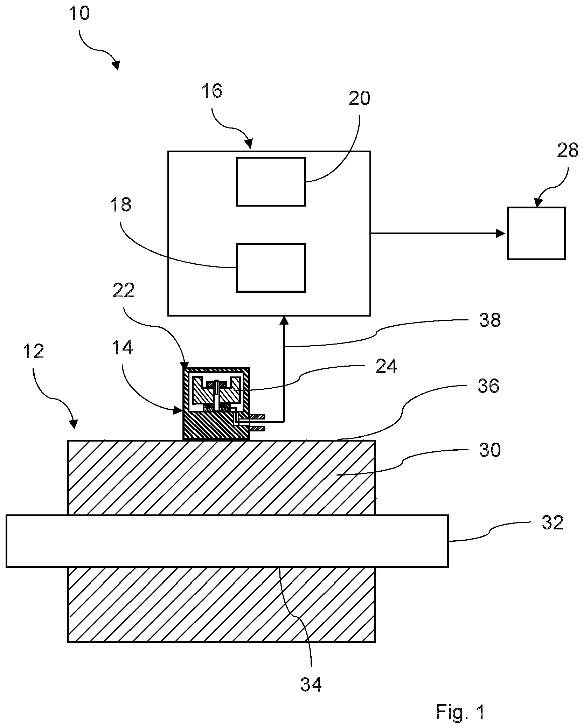

Fig. 1 zeigt schematisch eine Vorrichtung zur Überwachung des Betriebs einer Gleitlagerstelle/-Anordnung 12, die insgesamt mit dem Bezugszeichen 10 bezeichnet ist. Die Vorrichtung 10 umfasst einen Sensor 14, eine elektrische Auswerteeinrichtung 16 mit einem Prozessor 18 und einem Speicher 20 mit einem darauf abgelegten Computerprogramm. Vorliegend ist der Sensor 14 als piezoelektrischer Beschleunigungssensor 22 mit schwingungsfähiger seismischer Masse 24 ausgebildet. Der Beschleunigungssensor 22 ist mittels der schwingfähigen seismischen Masse 24 derart ausgebildet, dass eine Resonanzfrequenz 26 des Beschleunigungssensors 22 in einer Einbausituation in einem Bereich von 20 bis 70 kHz liegt. Die Auswerteeinrichtung 16 steht dabei - drahtgebunden oder drahtlos - in Verbindung mit dem Beschleunigungssensor 22 und kann beispielsweise zusätzlich mit einer externen, auch zum Beschleunigungssensor 22 örtlich beabstandeten Anzeigeeinrichtung 28 - bspw. Mobilgerät, Anzeigeleuchte, Bildschirm - verbunden sein.

Die nur schematisch angedeutete Gleitlageranordnung 12 umfasst hier beispielhaft ein Gleitlagergehäuse 30 und eine in dem Gleitlagergehäuse 30 gelagerte Welle 32, wobei weitere zwischen den Komponenten gegebenenfalls wirkende Gleitelemente oder Gleitbeschichtungen nicht dargestellt sind. Zwischen dem Gleitlagergehäuse 30 und der Welle 32 ist typischerweise ein Schmierfilm 34 für eine hydrodynamische Lagerung der Welle 32 vorgesehen, der über an sich bekannte Mittel ausgebildet wird, was daher nicht beschrieben wird. An einer Außenseite 36 des Gleitlagergehäuses 30 ist der Beschleunigungssensor 22 angeordnet und kann beispielsweise an dem Gleitlagergehäuse 30 verschraubt sein.

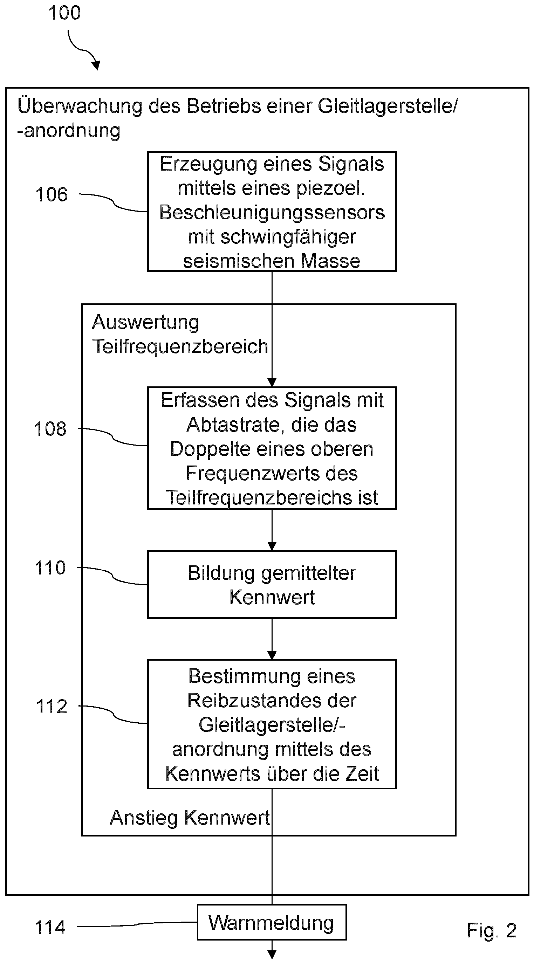

Die Vorrichtung 10 ist ausgebildet, um ein erfindungsgemäßes Verfahren der eingangs beschriebenen Ausbildung durchzuführen. Fig. 2 bis 4 zeigen Verfahrensschritte dreier Ausführungsformen 100, 102, 104 des Verfahrens.

Fig. 2 zeigt eine erste Ausführungsform 100 des Verfahrens. Im Betrieb, d.h. wenn Last an der Gleitlageranordnung 12 anliegt, also wenn die Welle 32 in Rotation versetzt wird, oder generell eine beliebige Komponente der Gleitlagerstelle oder - anordnung bezüglich der anderen Komponente in gleitende Bewegung versetzt wird, entstehen in der Gleitlageranordnung 12 Schwingungen. Diese Schwingungen breiten sich in Form von Körperschall in der Gleitlageranordnung 12 und auch in an die Gleitlageranordnung 12 angrenzende Komponenten aus. Die schwingfähige seismische Masse 24 des Beschleunigungssensors 22 wird durch den Körperschall zum Schwingen angeregt. In einem ersten Verfahrensschritt 106 wird durch Anregung der schwingfähigen seismischen Masse 24 des Beschleunigungssensors 22 und eines piezoelektrischen Effekts ein Signal 38 erzeugt (Fig. 1), welches die mit der Gleitlageranordnung 12 assoziierte Schwingungsanregung charakterisiert.

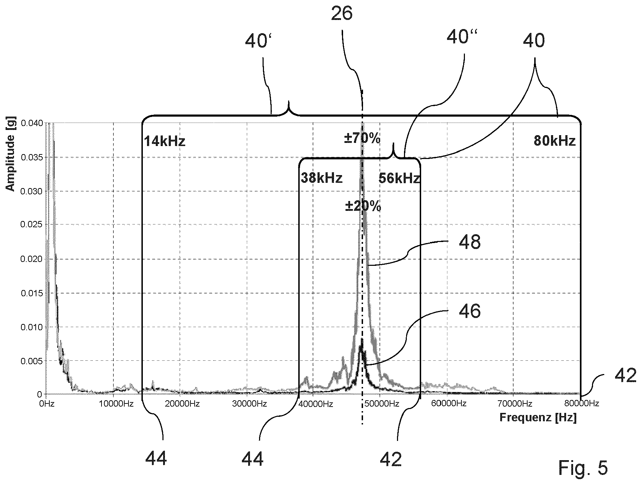

Der Speicher 20 und der darin abgelegte Computerprogrammcode sind im Zusammenwirken mit dem Prozessor 18 konfiguriert, das Signal 38 des Beschleunigungssensors 22 nur in einem die Resonanzfrequenz 26 beinhaltenden Teilfrequenzbereich 40 (siehe auch Fig. 5) auszuwerten. Der Teilfrequenzbereich 40 ist durch einen oberen Frequenzwert 42 und einen unteren Frequenzwert 44 begrenzt. Hierfür wird in einem zweiten Verfahrensschritt 108 das Signal 38 des Beschleunigungssensors 22 über die Zeit und mit einer Abtastrate erfasst, die vorzugsweise wenigstens dem zweifachen des oberen Frequenzwerts 42 entspricht. Dadurch, dass die Abtastrate dem zweifachen des oberen Frequenzwerts 42 des auszuwertenden Teilfrequenzbereichs 40 entspricht, wird das Signal 38 für die Auswertung auf den oberen Frequenzwert 42 begrenzt.

Nachfolgend wird aus dem erfassten Teilfrequenzbereich 40 im Verfahrensschritt 110 ein gemittelter Kennwert gebildet. Zur Bildung eines gemittelten Kennwerts stehen verschiedene mathematische Methoden, die eingangs genannt wurden, zur Verfügung, bspw. der quadratische Mittelwert des Signals 38 des Sensors 14.

Anhand des gebildeten Kennwerts kann im Verfahrensschritt 112 auf einen Reibzustand der Gleitlageranordnung 12 geschlossen werden. Es wird ausgehend von einem hydrodynamischen Reibzustand auf einen durch Mischreibung geprägten Reibzustand geschlossen, wenn der Kennwert im zeitlichen Verlauf ansteigt.

Wird Mischreibung festgestellt, wird vorzugsweise eine Warnmeldung 114 ausgegeben, die beispielsweise mittels der Anzeigeeinrichtung 28 wiedergegeben werden kann, sodass beispielsweise eine Wartung der Gleitlageranordnung 12 durchgeführt werden kann. Beispielsweise ist es somit möglich, dass Gleitlageranordnungen 12 von Offshore Windrädern entsprechend ihrem Betriebszustand gewartet werden.

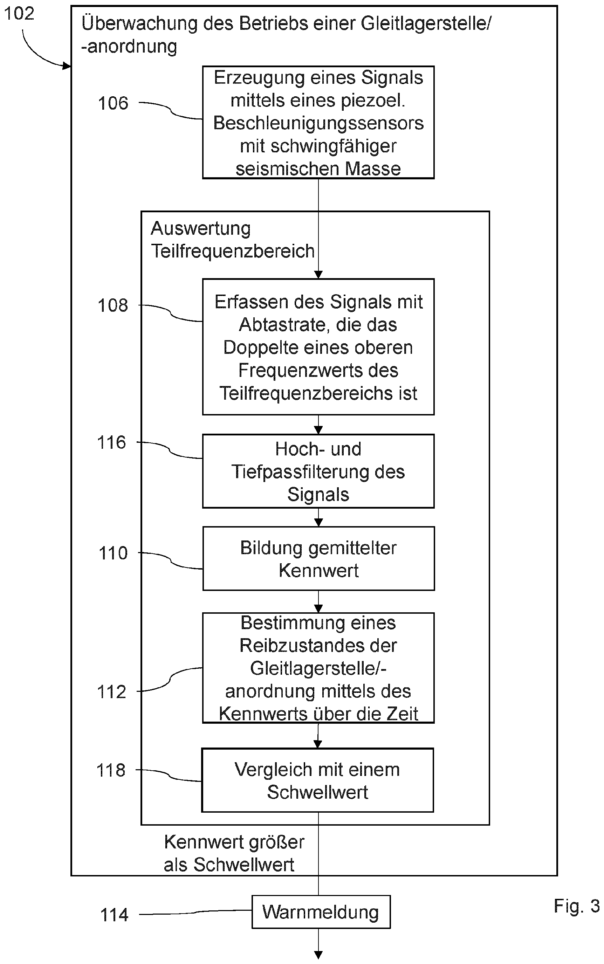

Fig. 3 bildet schematisch eine zweite Ausführungsform 102 des Verfahrens ab. Nach der Erzeugung eines mit einer Schwingungsanregung assoziierten Signals 38 des Sensors 14 im Verfahrensschritt 106 wird das Signal 38 wie bei Fig.2 in einem Verfahrensschritt 108 mit einer Abtastrate erfasst und dann in einem Verfahrensschritt 116 mittels eines Hochpassfilters und mittels eines Tiefpassfilters gefiltert. Dabei kann eine Grenzfrequenz des Hochpassfilters dem unteren Frequenzwert 44 des Teilfrequenzbereichs 40 entsprechen und eine Grenzfrequenz des Tiefpassfilters dem oberen Frequenzwert 42 des Teilfrequenzbereichs 40 entsprechen. Das Signal 38 ist somit auf den auszuwertenden Teilfrequenzbereich 40 begrenzt.

Ferner ist bei Fig. 3 eine weitere Variante realisiert, bei der nach Bildung des gemittelten Kennwerts im Verfahrensschritt 110 zusätzlich zu Verfahrensschritt 112 oder als ein Teil davon ein optionaler Verfahrensschritt 118 durchgeführt wird. Im Verfahrensschritt 118 wird der Kennwert mit einem Schwellwert für Mischreibung verglichen, sodass ausgehend von einem hydrodynamischen Reibzustand auf einen durch Mischreibung geprägten Reibzustand geschlossen wird, wenn der Kennwert im zeitlichen Verlauf ansteigt und den vorgegebenen Schwellwert übersteigt. Wenn Mischreibung festgestellt bzw. auf Mischreibung geschlossen wurde, kann vorzugsweise eine Warnmeldung 114 ausgegeben werden. Der zuvor festgelegte und abgespeicherte Schwellwert kann auf Berechnungen, Versuchen oder Erfahrungswerten basieren.

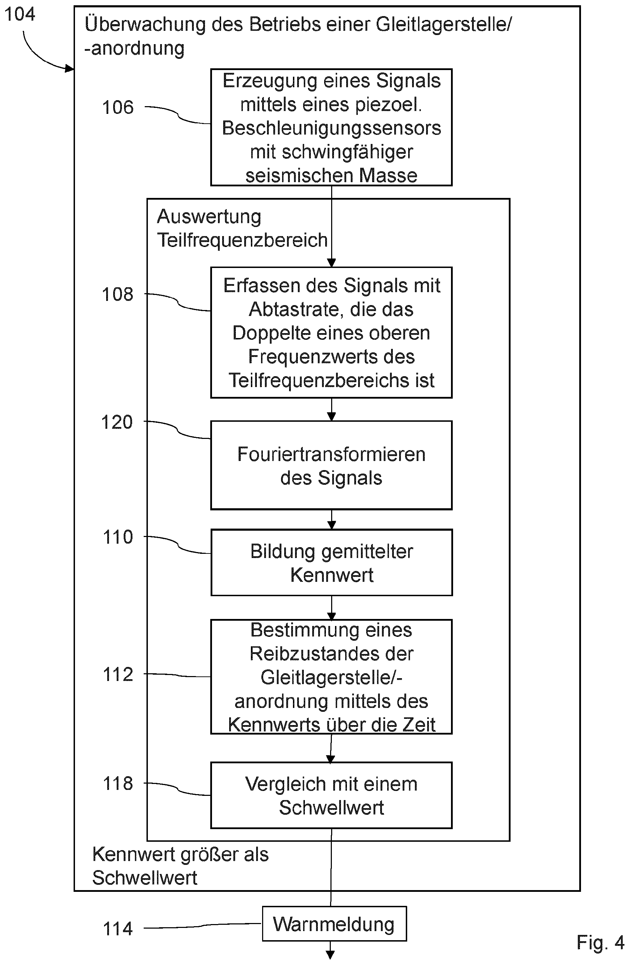

Fig. 4 bildet schematisch eine dritte Ausführungsform 104 des Verfahrens ab. In der dritten Ausführungsform 104 wird beispielhaft keine Hoch-/Tiefpassfilterung gemäß der zweiten Ausführungsform 102 durchgeführt, sondern es wird nach dem Erfassen des Signals 38 mit einer Abtastrate im Verfahrensschritt 108 in einem anschließenden Verfahrensschritt 120 das erfasste Signal 38 fouriertransformiert (siehe auch Fig. 5) und daran anschließend nur in dem Teilfrequenzbereich 40 ausgewertet. Nach Verfahrensschritt 110 der Bildung eines gemittelten Kennwerts wird Verfahrensschritt 112 der Bestimmung des Reibzustands ausgeführt, insbesondere wiederum optional anhand eines Schwellwertvergleichs gemäß Verfahrensschritt 118. Wiederum kann eine Warnmeldung ausgegeben werden, wenn der Kennwert im zeitlichen Verlauf ansteigt und den vorgegebenen Schwellwert übersteigt.

Es wird also bei allen Verfahrensvarianten der Reibzustand über die Zeit überwacht. Vorzugsweise kann eine Warnmeldung 114 ausgegeben werden, wenn Mischreibung festgestellt wird.

Fig. 5 ist eine beispielhafte grafische Darstellung zweier fouriertransformierter Signale 46, 48 eines einachsigen Beschleunigungssensors 22 mit einer Resonanzfrequenz 26 von 47 kHz bei unterschiedlichen Reibzuständen. Ein erstes fouriertransformiertes Signal 46 mit geringerer Amplitude (als schwarze Linie dargestellt) bildet einen hydrodynamischen Reibzustand ab, und ein zweites fouriertransformiertes Signal 48 mit größerer Amplitude (als graue Linie dargestellt) bildet einen Reibzustand mit Mischreibung ab.

Das zweite fouriertransformierte Signal 48 weist bei Mischreibung im Bereich der Resonanzfrequenz 26 eine deutlich größere Amplitude auf, als diejenige des ersten fouriertransformierten Signals 46 bei hydrodynamischer Reibung. Bei Mischreibung wird der Beschleunigungssensor 22 im Bereich der Resonanzfrequenz 26, d.h. bei der höchsten Empfindlichkeit, am stärksten angeregt, und der Mischreibungszustand ist ausgehend von einem hydrodynamischen Reibzustand somit erfassbar.

In Fig. 5 sind zwei die Resonanzfrequenz 26 beinhaltende alternative Teilfrequenzbereiche 40', 40'' abgebildet. Bei dem ersten Teilfrequenzbereich 40' ist der oberer Frequenzwert 42 das 1,7-Fache der Resonanzfrequenz 26 und der untere Frequenzwert 44 das 0,3-Fache der Resonanzfrequenz 26. Bei dem zweiten Teilfrequenzbereich 40" ist der obere Frequenzwert 42 das 1,2-Fache der Resonanzfrequenz 26 und der untere Frequenzwert 44 das 0,8-Fache der Resonanzfrequenz 26. Unterschiedliche Teilfrequenzbereiche 40 sind je nach Ausbildung des Beschleunigungssensors 22 zu wählen. Je kleiner der auszuwertende Teilfrequenzbereich 40 ist desto kleiner ist die auszuwertende Datenmenge. Wenn die Resonanzfrequenz 26 des mit der Gleitlagerstelle/-anordnung 12 gekoppelt angeordneten Beschleunigungssensors 22 und die Ausprägung der Reibzustände im Bereich der Resonanzfrequenz 26 nicht bekannt sind, dann kann der vorteilhafterweise auszuwertende Teilfrequenzbereich 40 und die Resonanzfrequenz 26 des Beschleunigungssensors 22 in der Einbausituation in einem Versuch und mittels Fouriertransformation bestimmt werden.

## Patentansprüche

1. Verfahren (100, 102, 104) zur Überwachung des Betriebs einer Gleitlagerstelle/-anordnung (12) mittels eines Sensors (14), wobei durch den Sensor (14) ein Signal (38) erzeugt wird, welches Signal (38) eine mit der Gleitlagerstelle/-anordnung (12) assoziierte Schwingungsanregung charakterisiert (106), **dadurch gekennzeichnet, dass** der Sensor (14) ein piezoelektrischer Beschleunigungssensor (22) ist und dass der piezoelektrische Beschleunigungssensor (22) eine schwingfähige seismische Masse (24) aufweist und demgemäß eine Resonanzfrequenz (26) aufweist und dass die Resonanzfrequenz (26) in einer Einbausituation des Sensors (14) in einem Bereich von 20 bis 70 kHz liegt, und dass das Signal (38) des Beschleunigungssensors (22) nur in einem die Resonanzfrequenz (26) beinhaltenden Teilfrequenzbereich (40, 40', 40") ausgewertet wird, der durch einen oberen Frequenzwert (42) und einen unteren Frequenzwert (44) begrenzt wird,
und dass das Signal (38) des Beschleunigungssensors (22) über die Zeit und mit einer Abtastrate erfasst wird, die wenigstens dem zweifachen des oberen Frequenzwerts (42) entspricht (108),
und dass aus dem Signal (38) des Beschleunigungssensors (22) in diesem Teilfrequenzbereich (40, 40', 40") ein gemittelter Kennwert gebildet wird (110),
und dass anhand des Kennwerts auf einen Reibzustand der Gleitlagerstelle/-anordnung geschlossen wird (112), und dass ausgehend von einem hydrodynamischen Reibzustand auf einen durch Mischreibung geprägten Reibzustand geschlossen wird, wenn der Kennwert im zeitlichen Verlauf ansteigt.

2. Verfahren (100, 102, 104) nach Anspruch 1, **dadurch gekennzeichnet, dass** die Resonanzfrequenz (26) in der Einbausituation des Sensors (14) in einem Bereich von 20 bis 50 kHz, insbesondere von 20 bis 40 kHz liegt.

3. Verfahren (100, 102, 104) nach einem der Ansprüche 1 oder 2, **dadurch gekennzeichnet, dass** der obere Frequenzwert (42) höchstens das 1,2-Fache oder höchstens das 1,3-Fache oder höchstens das 1,4-Fache oder höchstens das 1,5-Fache oder höchstens das 1,6-Fache oder höchstens das 1,7-Fache der Resonanzfrequenz (26) beträgt.

4. Verfahren (100, 102, 104) nach einem der vorstehenden Ansprüche, **dadurch gekennzeichnet, dass** der untere Frequenzwert (44) mindestens das 0,8-Fache oder mindestens das 0,7-Fache oder mindestens das 0,6-Fache oder mindestens das 0,5-Fache oder mindestens das 0,4- oder mindestens das 0,3-Fache der Resonanzfrequenz (26) beträgt.

5. Verfahren (100, 102, 104) nach einem der vorstehenden Ansprüche, **dadurch gekennzeichnet, dass** der Kennwert ein statistischer Mittelwert ist, insbesondere der quadratische Mittelwert, der Maximalwert, der Spitze-Tal-Wert, die Varianz, der Kurtosiswert, ein Scheitelwert.

6. Verfahren (102, 104) nach einem der vorstehenden Ansprüche, **dadurch gekennzeichnet, dass** ausgehend von einem hydrodynamischen Reibzustand auf einen durch Mischreibung geprägten Reibzustand geschlossen wird, wenn der Kennwert im zeitlichen Verlauf einen vorgegebenen oder vorgebbaren Schwellwert übersteigt (118).

7. Verfahren (102) nach einem der vorstehenden Ansprüche, **dadurch gekennzeichnet, dass** das Signal (38) des Beschleunigungssensors (22) mittels eines Hochpassfilters und insbesondere zusätzlich mittels eines Tiefpassfilters gefiltert wird (116).

8. Verfahren (102) nach Anspruch 7, **dadurch gekennzeichnet, dass** eine Grenzfrequenz des Hochpassfilters dem unteren Frequenzwert (44) des Teilfrequenzbereichs (40, 40', 40'') entspricht und/oder dass eine Grenzfrequenz des Tiefpassfilters dem oberen Frequenzwert (42) des Teilfrequenzbereichs (40, 40', 40") entspricht.

9. Verfahren (104) nach einem der Ansprüche 1 bis 6, **dadurch gekennzeichnet, dass** ein Signal (38) des Beschleunigungssensors (22) fouriertransformiert wird (120) und daran anschließend nur in dem Teilfrequenzbereich (40, 40', 40") ausgewertet wird.

10. Vorrichtung (10) zur Überwachung des Betriebs einer Gleitlagerstelle/-anordnung (12), umfassend einen Sensor (14), der mechanisch mit der Gleitlagerstelle/-anordnung (12) gekoppelt anordenbar oder angeordnet ist, wobei durch den Sensor (14) ein Signal (38) erzeugt wird, welches Signal (38) eine mit der Gleitlagerstelle/- anordnung (12) assoziierte Schwingungsanregung charakterisiert (106),
und weiter umfassend eine elektronische Auswerteeinrichtung (16) mit einem Prozessor (18) und
einem Speicher (20) mit einem darauf abgelegten Computerprogrammcode, **dadurch gekennzeichnet, dass** der Sensor (14) ein piezoelektrischer Beschleunigungssensor (22) ist und dass der piezoelektrische Beschleunigungssensor (22) eine schwingfähige seismische Masse (24) aufweist und demgemäß eine Resonanzfrequenz (26) aufweist, wobei die seismische Masse (24) durch Körperschall der Gleitlagerstelle/-anordnung (12) zum Schwingen angeregt wird und hierdurch das Signal (38) erzeugt wird (106), wobei die Resonanzfrequenz (26) in einer Einbausituation des Sensors (14) in einem Bereich von 20 bis 70 kHz liegt,
und dass der Speicher (20) und der Computerprogrammcode im Zusammenwirken mit dem Prozessor (18) konfiguriert sind, um das Signal (38) des Beschleunigungssensors (22) nur in einem die Resonanzfrequenz (26) beinhaltenden Teilfrequenzbereich (40, 40', 40") auszuwerten, der durch einen oberen Frequenzwert (42) und einen unteren Frequenzwert (44) begrenzt wird,
und weiter konfiguriert sind, um das Signal (38) des Beschleunigungssensors (22) über die Zeit und mit einer Abtastrate zu erfassen, die wenigstens dem zweifachen des oberen Frequenzwerts (42) entspricht (108),
und weiter konfiguriert sind, um aus dem Signal (38) des Beschleunigungssensors (22) in diesem Teilfrequenzbereich (40, 40', 40") einen gemittelten Kennwert zu bilden (110)
und anhand des Kennwerts auf einen Reibzustand der Gleitlagerstelle/-anordnung zu schließen (112),
und weiter konfiguriert sind, um ausgehend von einem hydrodynamischen Reibzustand auf einen durch Mischreibung geprägten Reibzustand zu schließen, wenn der Kennwert im zeitlichen Verlauf ansteigt.

11. Vorrichtung (10) nach Anspruch 10, **dadurch gekennzeichnet, dass** die Vorrichtung (10) einen Hochpassfilter und insbesondere zusätzlich einen Tiefpassfilter umfasst, und dass das Signal (38) des Beschleunigungssensors (22) mittels des Hochpassfilters und insbesondere zusätzlich mittels des Tiefpassfilters gefiltert wird (116).

12. Vorrichtung (10) nach Anspruch 11, **dadurch gekennzeichnet, dass** eine Grenzfrequenz des Hochpassfilters dem unteren Frequenzwert (44) des Teilfrequenzbereichs (40, 40', 40") entspricht und/oder dass eine Grenzfrequenz des Tiefpassfilters dem oberen Frequenzwert (42) des Teilfrequenzbereichs (40, 40', 40") entspricht.

13. Vorrichtung (10) nach Anspruch 10, **dadurch gekennzeichnet, dass** die elektronische Auswerteeinrichtung (16) ausgebildet ist, das Signal (38) des Beschleunigungssensors (22) fourier zu transformieren (120) und daran anschließend nur in dem Teilfrequenzbereich (40, 40', 40") auszuwerten.

14. Gleitlagerstelle/-anordnung (12), welche mechanisch gekoppelt ist mit einer Vorrichtung (10) zur Überwachung des Betriebs der Gleitlagerstelle/-anordnung (12) nach wenigstens einem der Ansprüche 10 bis 13, so dass von der Gleitlagerstelle/-anordnung (12) erzeugter Körperschall auf die Vorrichtung (10) und deren piezoelektrischen Beschleunigungssensor (22) übertragen und durch die Vorrichtung (10) überwacht werden kann.

## Claims

1. Method (100, 102, 104) for monitoring the operation of a plain bearing location/arrangement (12) by means of a sensor (14), wherein the sensor (14) generates a signal (38), which signal (38) characterizes (106) an oscillation excitation associated with the plain bearing location/arrangement (12), **characterized in that** the sensor (14) is a piezoelectric acceleration sensor (22), and that the piezoelectric acceleration sensor (22) has an oscillatable seismic mass (24) and accordingly a resonance frequency (26), and that, when the sensor (14) is in an installed situation, the resonance frequency (26) lies within a range of 20 to 70 kHz, and that the signal (38) of the acceleration sensor (22) is evaluated only in a partial frequency range (40, 40', 40") which contains the resonance frequency (26) and is limited by an upper frequency value (42) and a lower frequency value (44), and that the signal (38) of the acceleration sensor (22) is recorded over time and at a sampling rate, which corresponds (108) to at least twice the upper frequency value (42),
and that an averaged characteristic value is formed (110) from the signal (38) of the acceleration sensor (22) in this partial frequency range (40, 40', 40"),
and that a friction state of the plain bearing location/arrangement is inferred (112) on the basis of the characteristic value, and that, starting from a hydrodynamic friction state, a friction state **characterized by** mixed friction is inferred if the characteristic value increases over the course of time.

2. Method (100, 102, 104) according to claim 1, **characterized in that**, when the sensor (14) is in the installed situation, the resonance frequency (26) lies within a range of 20 to 50 kHz, in particular of 20 to 40 kHz.

3. Method (100, 102, 104) according to one of claims 1 or 2,
**characterized in that** the upper frequency value (42) is at most 1.2 times, or at most 1.3 times, or at most 1.4 times, or at most 1.5 times, or at most 1.6 times, or at most 1.7 times the resonance frequency (26).

4. Method (100, 102, 104) according to one of the preceding claims,
**characterized in that** the lower frequency value (44) is at least 0.8 times, or at least 0.7 times, or at least 0.6 times, or at least 0.5 times, or at least 0.4 or at least 0.3 times the resonance frequency (26).

5. Method (100, 102, 104) according to one of the preceding claims,
**characterized in that** the characteristic value is a statistical mean value, in particular the quadratic mean value, the maximum value, the peak-to-valley value, the variance, the kurtosis value, a peak value.

6. Method (102, 104) according to one of the preceding claims,
**characterized in that**, starting from a hydrodynamic friction state, a friction state **characterized by** mixed friction is inferred if the characteristic value exceeds (118) a predetermined or predeterminable threshold value over the course of time.

7. Method (102) according to one of the preceding claims,
**characterized in that** the signal (38) of the acceleration sensor (22) is filtered (116) by means of a high-pass filter and, in particular, additionally by means of a low-pass filter.

8. Method (102) according to claim 7, **characterized in that** a cutoff frequency of the high-pass filter corresponds to the lower frequency value (44) of the partial frequency range (40, 40', 40"), and/or that a cutoff frequency of the low-pass filter corresponds to the upper frequency value (42) of the partial frequency range (40, 40', 40").

9. Method (104) according to one of claims 1 to 6, **characterized in that** a signal (38) of the acceleration sensor (22) is Fourier-transformed (120) and subsequently evaluated only in the partial frequency range (40, 40', 40").

10. Device (10) for monitoring the operation of a plain bearing location/arrangement (12), comprising a sensor (14) which can be arranged or is arranged so as to be mechanically coupled to the plain bearing location/arrangement (12), wherein the sensor (14) generates a signal (38), which signal (38) characterizes (106) an oscillation excitation associated with the plain bearing location/arrangement (12),
and further comprising an electronic evaluation apparatus (16) with a processor (18) and a memory (20) with a computer program code stored thereon, **characterized in that** the sensor (14) is a piezoelectric acceleration sensor (22), and that the piezoelectric acceleration sensor (22) has an oscillatable seismic mass (24) and accordingly a resonance frequency (26), wherein the seismic mass (24) is excited to oscillate by structure-borne sound of the plain bearing location/arrangement (12), and the signal (38) is thereby generated (106), wherein, when the sensor (14) is in an installed situation, the resonance frequency (26) is in a range of 20 to 70 kHz,
and that the memory (20) and the computer program code are configured in cooperation with the processor (18) to evaluate the signal (38) of the acceleration sensor (22) only in a partial frequency range (40, 40', 40") which contains the resonance frequency (26) and is limited by an upper frequency value (42) and a lower frequency value (44),
and are further configured to record the signal (38) of the acceleration sensor (22) over time and at a sampling rate that corresponds (108) to at least twice the upper frequency value (42), and are further configured to form (110) an averaged characteristic value from the signal (38) of the acceleration sensor (22) in this partial frequency range (40, 40', 40")
and, on the basis of the characteristic value, to infer (112) a friction state of the plain bearing location/arrangement, and are further configured, starting from a hydrodynamic friction state, to infer a friction state **characterized by** mixed friction, when the characteristic value increases over the course of time.

11. Device (10) according to claim 10, **characterized in that** the device (10) comprises a high-pass filter and, in particular, additionally a low-pass filter, and that the signal (38) of the acceleration sensor (22) is filtered (116) by means of the high-pass filter and, in particular, additionally by means of the low-pass filter.

12. Device (10) according to claim 11, **characterized in that** a cutoff frequency of the high-pass filter corresponds to the lower frequency value (44) of the partial frequency range (40, 40', 40"), and/or that a cutoff frequency of the low-pass filter corresponds to the upper frequency value (42) of the partial frequency range (40, 40', 40").

13. Device (10) according to claim 10, **characterized in that** the electronic evaluation apparatus (16) is designed to Fourier-transform (120) the signal (38) of the acceleration sensor (22) and then to evaluate it only in the partial frequency range (40, 40', 40").

14. Plain bearing location/arrangement (12) which is mechanically coupled to a device (10) for monitoring the operation of the plain bearing location/arrangement (12) according to at least one of claims 10 to 13, so that structure-borne sound generated by the plain bearing location/arrangement (12) can be transmitted to the device (10) and its piezoelectric acceleration sensor (22) and monitored by the device (10).

## Revendications

1. Procédé (100, 102, 104) de surveillance du fonctionnement d'un point/ensemble de palier lisse (12) au moyen d'un capteur (14), dans lequel un signal (38) est généré par le capteur (14), lequel signal (38) caractérise (106) une excitation vibratoire associée au point/ensemble de palier lisse (12), **caractérisé en ce que** le capteur (14) est un capteur d'accélération piézoélectrique (22) et **en ce que** le capteur d'accélération piézoélectrique (22) présente une masse sismique (24) capable d'osciller et présente en conséquence une fréquence de résonance (26) et **en ce que** la fréquence de résonance (26) se situe dans une plage de 20 à 70 kHz dans une situation de montage du capteur (14), et **en ce que** le signal (38) du capteur d'accélération (22) ne se situe que dans une plage de fréquences partielle (40, 40', 40") comportant la fréquence de résonance (26) qui est délimitée par une valeur de fréquence supérieure (42) et une valeur de fréquence inférieure (44), et **en ce que** le signal (38) du capteur d'accélération (22) est acquis dans le temps et avec une vitesse d'échantillonnage qui correspond au moins au double de la valeur de fréquence supérieure (42) (108), et **en ce qu'**une valeur caractéristique moyenne est formée (110) à partir du signal (38) du capteur d'accélération (22) dans cette plage de fréquences partielle (40, 40', 40"), et **en ce qu'**à l'aide de la valeur caractéristique, on conclut (112) à un état de frottement du point/ensemble de palier lisse, et **en ce qu'**en partant d'un état de frottement hydrodynamique, on conclut à un état de frottement marqué par un frottement mixte, lorsque la valeur caractéristique augmente au fil du temps.

2. Procédé (100, 102, 104) selon la revendication 1, **caractérisé en ce que** la fréquence de résonance (26) se situe dans une plage de 20 à 50 kHz, en particulier de 20 à 40 kHz, dans la situation de montage du capteur (14).

3. Procédé (100, 102, 104) selon l'une quelconque des revendications 1 ou 2, **caractérisé en ce que** la valeur de fréquence supérieure (42) est au plus égale à 1,2 fois ou au plus égale à 1,3 fois ou au plus égale à 1,4 fois ou au plus égale à 1,5 fois ou au plus égale à 1,6 fois ou au plus égale à 1,7 fois la fréquence de résonance (26).

4. Procédé (100, 102, 104) selon l'une quelconque des revendications précédentes, **caractérisé en ce que** la valeur de fréquence inférieure (44) est au moins égale à 0,8 fois ou au moins égale à 0,7 fois ou au moins égale à 0,6 fois ou au moins égale à 0,5 fois ou au moins égale à 0,4 fois ou au moins égale à 0,3 fois la fréquence de résonance (26).

5. Procédé (100, 102, 104) selon l'une quelconque des revendications précédentes, **caractérisé en ce que** la valeur caractéristique est une moyenne statistique, notamment la moyenne quadratique, la valeur maximale, la valeur pic-vallée, la variance, la valeur de kurtosis, une valeur de crête.

6. Procédé (102, 104) selon l'une quelconque des revendications précédentes, **caractérisé en ce qu'**en partant d'un état de frottement hydrodynamique, on conclut à un état de frottement marqué par un frottement mixte lorsque la valeur caractéristique dépasse (118), au fil du temps, une valeur seuil prédéfinie ou pouvant être prédéfinie.

7. Procédé (102) selon l'une quelconque des revendications précédentes, **caractérisé en ce que** le signal (38) du capteur d'accélération (22) est filtré (116) au moyen d'un filtre passe-haut et en particulier en outre au moyen d'un filtre passe-bas.

8. Procédé (102) selon la revendication 7, **caractérisé en ce qu'**une fréquence de coupure du filtre passe-haut correspond à la valeur de fréquence inférieure (44) de la plage de fréquences partielle (40, 40', 40") et/ou **en ce qu'**une fréquence de coupure du filtre passe-bas correspond à la valeur de fréquence supérieure (42) de la plage de fréquences partielle (40, 40', 40").

9. Procédé (104) selon l'une quelconque des revendications 1 à 6, **caractérisé en ce qu'**un signal (38) du capteur d'accélération (22) subit une transformation de Fourier (120) et n'est ensuite évalué que dans la plage de fréquences partielle (40, 40', 40").

10. Dispositif (10) de surveillance du fonctionnement d'un point/ensemble de palier lisse (12), comprenant un capteur (14) qui peut être disposé ou est disposé de manière couplée mécaniquement au point/ensemble de palier lisse (12), dans lequel un signal (38) est généré par le capteur (14), lequel signal (38) caractérise (106) une excitation vibratoire associée au point/ensemble de palier lisse (12), et comprenant en outre un système d'évaluation électronique (16) avec un processeur (18) et une mémoire (20) avec un code de programme informatique qui y est enregistré, **caractérisé en ce que** le capteur (14) est un capteur d'accélération piézoélectrique (22) et **en ce que** le capteur d'accélération piézoélectrique (22) présente une masse sismique vibrante (24) et présente par conséquent une fréquence de résonance (26), dans lequel la masse sismique (24) est excitée pour osciller par le bruit de structure du point/ensemble de palier lisse (12) et le signal (38) est ainsi généré (106), dans lequel la fréquence de résonance (26) se situe dans une plage de 20 à 70 kHz dans une situation de montage du capteur (14), et **en ce que** la mémoire (20) et le code de programme informatique sont configurés, en coopération avec le processeur (18), pour évaluer le signal (38) du capteur d'accélération (22) uniquement dans une plage de fréquences partielle (40, 40', 40") comportant la fréquence de résonance (26), qui est délimitée par une valeur de fréquence supérieure (42) et une valeur de fréquence inférieure (44), et sont en outre configurés pour acquérir le signal (38) du capteur d'accélération (22) dans le temps et à une vitesse d'échantillonnage qui correspond au moins au double de la valeur de fréquence supérieure (42) (108), et sont en outre configurés pour former (110) une valeur caractéristique moyenne à partir du signal (38) du capteur d'accélération (22) dans cette plage de fréquences partielle (40, 40', 40") et pour conclure (112), à l'aide de la valeur caractéristique, à un état de frottement du point/ensemble de palier lisse, et sont en outre configurés pour conclure, en partant d'un état de frottement hydrodynamique, à un état de frottement marqué par un frottement mixte, lorsque la valeur caractéristique augmente au fil du temps.

11. Dispositif (10) selon la revendication 10, **caractérisé en ce que** le dispositif (10) comprend un filtre passe-haut et en particulier en outre un filtre passe-bas, et **en ce que** le signal (38) du capteur d'accélération (22) est filtré (116) au moyen du filtre passe-haut et en particulier en outre au moyen du filtre passe-bas (116).

12. Dispositif (10) selon la revendication 11, **caractérisé en ce qu'**une fréquence de coupure du filtre passe-haut correspond à la valeur de fréquence inférieure (44) de la plage de fréquences partielle (40, 40', 40") et/ou **en ce qu'**une fréquence de coupure du filtre passe-bas correspond à la valeur de fréquence supérieure (42) de la plage de fréquences partielle (40, 40', 40").

13. Dispositif (10) selon la revendication 10, **caractérisé en ce que** le système d'évaluation électronique (16) est réalisé pour transformer en fourier (120) le signal (38) du capteur d'accélération (22) et pour ne l'évaluer ensuite que dans la plage de fréquences partielle (40, 40', 40").

14. Point/ensemble de palier lisse (12), lequel est couplé mécaniquement à un dispositif (10) de surveillance du fonctionnement du point/ensemble de palier lisse (12) selon au moins l'une quelconque des revendications 10 à 13, de sorte que le bruit de structure généré par le point/ensemble de palier lisse (12) peut être transmis au dispositif (10) et au capteur d'accélération piézoélectrique (22) de celui-ci et peut être surveillé par le dispositif (10).
